# EUROPEAN PATENT SPECIFICATION

(11) **EP 3 924 176 B1**
(45) Date of publication and mention of the grant of the patent: **01.11.2023**
(21) Application number: 20703457.0
(22) Date of filing: 04.02.2020
(51) Int. Cl.: B29D 99/00, B29C 70/34, F01D 5/14, F01D 5/28

(54) **A METHOD OF MANUFACTURING A COMPOSITE BLADE**
VERFAHREN ZUR HERSTELLUNG EINER VERBUNDSCHAUFEL
PROCÉDÉ DE FABRICATION D'UNE LAME COMPOSITE

(30) Priority: 14.02.2019 GB 201902038
(43) Date of publication of application: 22.12.2021
(73) Proprietor: Rolls-Royce plc, London N1 9FX (GB)
(72) Inventor: MARENGO, Giovanni Antonio, Derby DE24 8BJ (GB); MEE, Kevin, Derby DE24 8BJ (GB)
(74) Representative: Rolls-Royce plc
(86) International application number: PCT/EP2020/052781
(87) International publication number: WO 2020/164979

(56) References cited:
- EP-A1- 2 270 337
- US-A- 5 375 978

## Description

The present invention relates to a method of manufacturing a composite blade.

Composite blades are typically produced by laying-up multiple layers of carbon fibre material, by hand or with an automated machine, onto a tool surface shaped closely to the finished dimensions of the blade (a "near-net shape"), curing the lay-up, and finishing the cured blade. Even though the automated machine lay-up is much faster than hand lay-up, it can still be a very time consuming process requiring expensive equipment and intricate programming of a head path for a lay-up machine to traverse complex geometry of the blade.

EP 2270337 discloses a gas turbine engine blade for aircraft which has a 3-dimensional blade surface shape twisted around a center line at an angle of 45 degrees or more and 70 degrees or less, wherein the blade is provided with multiple composite material prepregs which contain reinforced fiber and which are integrally molded after being laminated in the thickness direction, and the reinforced fiber runs continuously without interruption within each layer of the composite material prepregs.

US 5,375,978 discloses a composite airfoil particularly useful as a fan blade, having a high degree of twist, in a large high bypass ratio turbofan engine. The composite airfoil of the has a progression of filament reinforced airfoil laminations of varying span, arranged in order by span, and interrupted by at least one filament reinforced airfoil lamination having a span out of height order to form what is called a confused or broken shear plane where radially outer tips of the laminations end.

According to a first aspect, there is provided a method of manufacturing a composite blade, the method comprising a lay-up operation comprising laying up fibre reinforcement material on an untwisted lay-up surface to make a blade pre-form; and a forming operation comprising forming the blade pre-form to introduce twist in the blade pre-form.

Twist may be introduced in a direction around a span-wise axis of the blade, the span-wise axis running from a root to a tip of the blade.

The lay-up operation may comprise laying-up two or more potions of the blade pre-form onto the or each respective lay-up surface. The two or more portions may subsequently be combine together at an interface to form the blade pre-form.

The interface between the two portions may correspond to a camber line of the composite blade. The interface may correspond to an equal thickness distribution on each side of the blade pre-form.

The lay-up operation may comprise laying-up unitary ply sheets (otherwise known as "broadgood plies"), such that at least some ply layers of the pre-form consist of a respective portion of a unitary ply sheet. The unitary ply sheets may be pre-fabricated sheets of multiple tows or tapes. The lay-up operation may comprise laying-up unitary ply sheets, such that all of the ply layers of the pre-form consist of a respective unitary ply sheet.

The length of a blade may be its span-wise length from a root to a tip of the blade. The width may be measured along a chord of the blade or on the base of a root of the blade. The depth of the blade may be the thickness of the blade along a lay-up direction.

The lay-up operation may comprise laying-up fibre reinforcement material to provide a multi-blade pre-form. The multi-blade pre-form may be cut into individual blade pre-forms before individually forming each of the blade pre-forms in respective forming operations.

At least some of the unitary ply sheets of the multi-blade pre-form may extend over a region corresponding to at least two blade pre-forms.

The blade pre-form may be twisted by up to 90 degrees around a span-wise axis of the blade pre-form in the forming operation. The blade pre-form may be twisted by at least 15 degrees, for example at least 30 degrees, at least 45 degrees, at least 60 degrees or at least 75 degrees. The blade pre-form may be twisted by an amount between 15 and 90 degrees, for example between 30 and 90 degrees, between 45 and 90 degrees, between 60 and 90 degrees.

The lay-up surface may be curved in only one dimension. The lay-up surface may be curved about a chord-wise axis of the blade.

An aerofoil region of the lay-up surface corresponding to an aerofoil portion of the blade pre-form may be substantially flat. A root region of the lay-up surface corresponding to a root portion of the blade pre-form may depart from the plane of the aerofoil region of the lay-up surface.

The lay-up surface may be substantially flat in a region corresponding to a root to a tip of the blade pre-form.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc.

The fan of a gas turbine as described and/or claimed herein may have any desired number of fan blades, for example 16, 18, 20, or 22 fan blades.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 shows a side view of a composite fan blade;
Figure 3 shows a sectional side view of an apparatus laying-up a portion of a blade pre-form;
Figure 4 shows a sectional side view of a blade pre-form made from two portions;
Figure 5 is a flow chart of a method of manufacturing a composite blade;
Figure 6 is a flow chart of a method of manufacturing multiple composite blades at once; and
Figure 7 shows a plan view of a lay-up surface having a multi-blade pre-form.

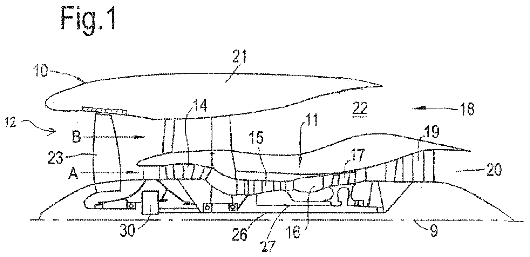

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 100, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

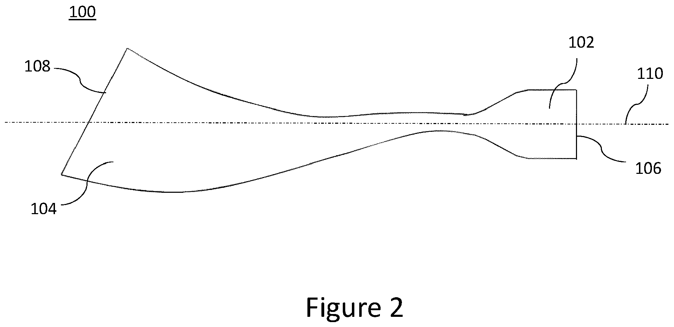

**Figure 2** shows a side view of a composite blade 100. In this example, the blade 100 is a fan blade having a modern twisted shape and comprises a root portion 102 and an aerofoil portion 104. The fan blade 100 extends from a root base 106 on the root portion 102 to a tip 108 on the aerofoil portion 104 along a span-wise axis 20. The aerofoil portion 104 is twisted with respect to the root portion 102 about the span-wise axis 110. The root portion 102 is configured to be retained in a hub of an engine.

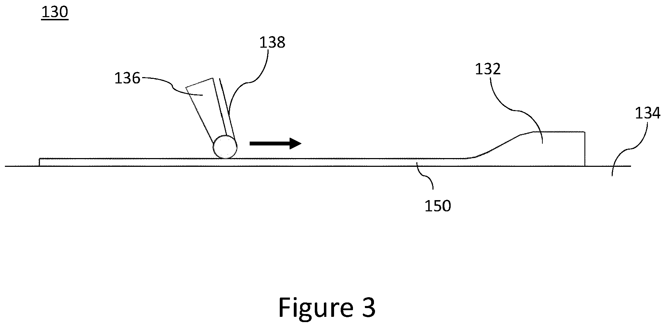

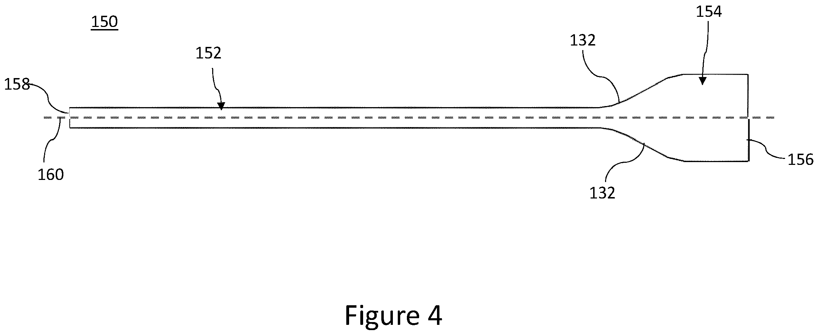

**Figure 3** shows a side sectional view of a lay-up apparatus 130 for laying-up a portion 132 of a blade pre-form 150 (shown in Figure 4). The lay-up apparatus 130 comprises a lay-up surface 134 and a lay-up head 136 which, in this example, is configured to apply layers of fibre reinforcement material 138 in the form of tape or tows to the lay-up surface 134 or on composite material already on the lay-up surface 134. In other examples, the lay-up head may be configured to pick up and place unitary sheets of fibre reinforcement material on the lay-up surface as will be described below.

In this example, the portion 132 of the blade pre-form 150 corresponds to one half of the blade pre-form 150. In other examples, the portion of the blade pre-form 150 may comprise more or less than 50% of the blade pre-form.

**Figure 4** shows a corresponding blade pre-form 150 which, in this simplified example, comprises two identical portions 132 made with the apparatus 130 which are joined along an interface 160. The interface 160 corresponds to the camber line of the composite blade 100 when the blade pre-form 150 is cured. In other words, the interface 160 corresponds to an equal thickness distribution on each side of the interface 160.

In some examples, the portions of the blade pre-form may not be identical. In other examples the interface may be any line through the blade pre-form and the thickness distribution on either side of the interface may be unequal. In some examples, there may be more than two portions combined to make the blade pre-form or the blade pre-form may be made in a single portion on a lay-up apparatus.

The blade pre-form 150 comprises an aerofoil portion 152 and a root portion 154 and extends from a root base 156 to a tip 158, which correspond to the root base 106 and the tip 108 respectively of the composite blade 100.

Referring back to Figure 3, the lay-up surface 134 has a flat surface profile, and is untwisted. In some examples, the lay-up surface may be curved along only one dimension, such as along a span-wise direction of the blade pre-form 150 (i.e. curved about a line corresponding to a chord-wise direction). In other examples, the lay-up surface may be flat in an aerofoil region corresponding to the aerofoil portion of the blade portion 132, and the lay-up surface may depart from the plane of the aerofoil region of the lay-up surface in a root region of the lay-up surface corresponding to the root portion of the blade portion 132. This may be particularly useful when the blade pre-form is laid-up in a single portion, as it may permit the maximum displacement in the root portion to be minimised by offsetting the lay-up surface from the relatively thicker root below the lay-up surface for the relatively thinner aerofoil.

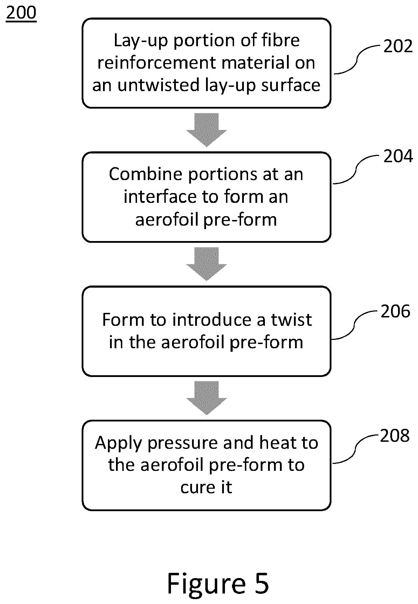

**Figure 5** is a flow chart showing steps of a method 200 of manufacturing the composite blade 100, which will be described by way of example with reference to the above examples. In step 202, fibre reinforcement material such as pre-impregnated carbon fibre reinforced resin, is laid-up on an untwisted lay-up surface in a lay-up operation to make a portion 132 of the blade pre-form 150.

The portion 132 may be made by laying-up tows or tapes of fibre reinforcement material. In other examples, the portions may be laid up by picking up and placing unitary ply sheets of fibre reinforcement material on top of one another (or upon one or more layers of tows or tapes) so that at least some of the ply layers of the blade pre-form consist of a respective unitary ply sheet. In some examples, the unitary ply sheets may be placed such that all of the ply layers in the blade pre-form consist of the respective unitary ply sheets.

Whether forming layers of a pre-form by tows, tapes or unitary ply sheets, in order to form a complex geometry it is typically necessary to form the layer to have a curved boundary (i.e. curved within the plane of the layer). For unitary ply sheets, this may be done by cutting the ply sheet to size. When laying up a pre-form using tows or tapes, the boundary may be formed by an applicator head cutting the tows or tapes at an appropriate location. This may result in a saw-tooth profile in the edge of the boundary, the effects of which can be mitigated by using relative narrow tows or tapes.

In step 204, portions 132 of the blade pre-form 150 are combined at an interface 160 to form the blade pre-form 150. As described above, in some examples, two identical portions may be joined together to form the blade pre-form. In other examples, there may be two different portions which are joined together to form the blade pre-form. In further examples, there may be more than two portions combined to form the blade pre-form.

As explained above with reference to Figure 4, the blade pre-form may alternatively be laid-up in one part in step 1202. In this case, step 204 is omitted as it is not necessary to combine more than one portion to form the blade pre-form.

Since the lay-up surface 134 of the apparatus 130 is untwisted, when the blade pre-form 150 is made, it requires further processing in order to form the desired shape of the composite blade 100. Therefore, in step 206, the blade pre-form 150 is formed in a forming operation to introduce a twist along the aerofoil portion 152 of the blade pre-form 150 relative to the root portion 154 of the blade pre-form 150.

In this example, the forming operation comprises a double diaphragm forming process in which the blade pre-form 150 is placed between two diaphragms. The area between the diaphragms is evacuated to compress the blade pre-form 150 between the diaphragms. The diaphragms and blade pre-form 50 are driven against a mould surface. The blade pre-form may be driven against a mould surface by applying pressure to an opposing side of the blade pre-form and/or by evacuating the area between the mould surface and the diaphragm and blade pre-form 150. The blade pre-form 150 therefore adopts the shape of the mould surface.

In other examples, the forming operation may comprise any type of diaphragm forming process, or forming between two mould surfaces.

In this example, the forming operation twists the aerofoil portion 152 by up to 60 degrees relative the root portion 154 when it is driven against the mould surface, for example at least 15 degrees. In other examples, the angle of twisting introduced to the aerofoil portion 152 relative the root portion 154 may be different, and may be more than 60 degrees, for example up to 90degrees. Such twisting during forming has been found to reduce wrinkling in the pre-form as the twisting applies tension to the fibres in the blade pre-form 150.

In step 208, pressure and heat is applied to the blade pre-form 150 to cure it, to form the composite blade 100. The pressure and heat may be provided by an autoclave, for example. Once cured the composite blade 100 may require machining to finish.

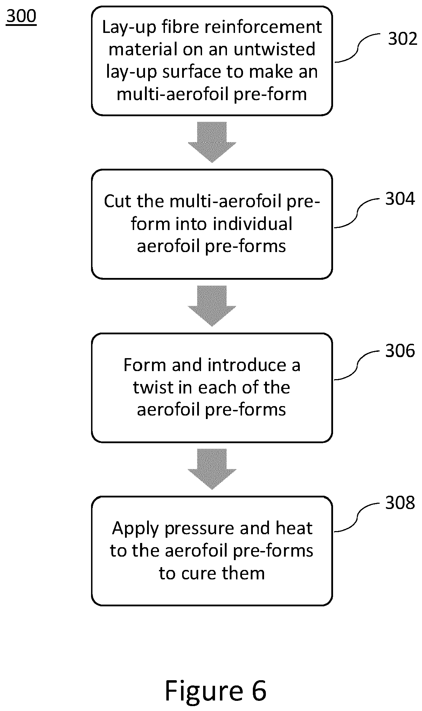

**Figure 6** is a flow chart showing steps of a method 300 for forming multiple composite blades 100 at once.

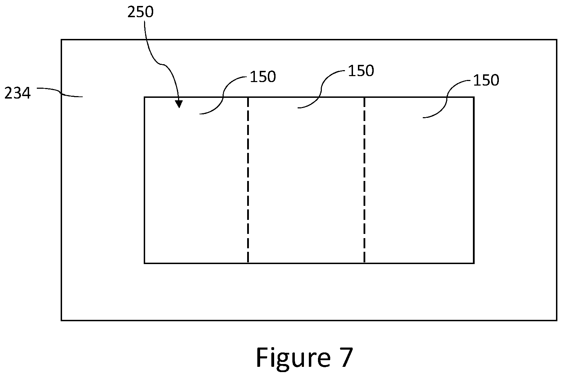

In step 302 fibre reinforcement material is laid-up on an untwisted lay-up surface 234 in a lay-up operation to make a multi-blade pre-form 250. The multi-blade pre-form 250 is a pre-form corresponding to more than one blade pre-form 150, as shown by way of example in **Figure 7**.

In some examples, the lay-up operation comprises laying up tows or tapes of fibre reinforcement material such as pre-impregnated carbon fibre reinforced resin. In other examples, the lay-up operation may comprise picking up and placing unitary ply sheets of fibre reinforcement material on top of one another so that at least some of the unitary ply sheets of the multi-blade pre-form extend over a region corresponding to at least two blades.

The multi-blade pre-form may also be laid-up in portions in a similar manner to step 202 of the method 200 described with reference to Figure 5. In such examples, the portions of the multi-blade pre-form are combined to make the multi-blade pre-form before proceeding to step 304, or each set of pre-form portions for a respective blade are combined after step 304 to make multiple blade pre-forms 150.

In step 304, the multi-blade pre-form is cut into individual blade pre-forms 150.

In step 306, the individual blade pre-forms 150 are formed in a forming operation to introduce a twist in the same manner as described in step 206 for the single blade pre-form 150 method.

In step 308, pressure and heat is applied to each of the blade pre-forms 150 to cure them in a similar manner as described in step 208 of the method 200. Once cured, the composite blades 100 may require machining to finish.

By laying-up on an untwisted lay-up surface, the lay-up operation is more efficient than laying-up on a twisted lay-up surface. The simplified geometry of the lay-up surface allows tows or tapes of material to be applied much more quickly, with less complex machinery.

In previously known lay-up operations for blades, the complex geometry of a near net shape lay-up surface limits the width of tows which can be used without bridging occurring during lay-up. Furthermore, traversing over a complex geometry limits the rate at which tows can be laid up. Due to the simplified geometry of the lay-up surface 134, tows or tapes 138 for laying-up the blade or portions of the blade may be wider than for a twisted lay-up surface, or a unitary sheet or broadgood ply may be applied to form a layer of the pre-form. By using wider tows or tapes or broadgood plies, it may be faster to lay-up a layer of the preform (e.g. by covering more surface area in one pass of the lay-up head 136 than previous methods, thereby improving the speed and efficiency of lay-up of a blade pre-form, or by simply applying a broadgood ply). Further, since the lay-up head 136 does not need to traverse over a complex geometry, the speed of the lay-up head 136 itself can also be increased.

Further, equipment may require fewer degrees of freedom to navigate the contours of the geometry without intersecting the lay-up surface or partially laid-up pre-form (e.g. only translational movement, without rotational movement).

If the lay-up surface is untwisted, whole sheets of fibre reinforcement material may be applied to the lay-up surface in one go, thereby further simplifying the machinery required for laying-up the fibre reinforcement material, as well as improving the speed of the lay-up operation.

With a flat lay-up surface, or a lay-up surface having a curve in one dimension, an alternative method of making multiple blades at once includes using a lay-up machine having multiple lay-up heads side-by-side which move together and each simultaneously lay-up a blade or portions of a blade pre-form. Once the blade pre-forms are provided, the method proceeds to step 306 of the method 300 for making multiple composite blades 100.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method (300) of manufacturing a composite blade (100), the method comprising:
a lay-up operation comprising laying up fibre reinforcement material (138) on an untwisted lay-up surface (234) to make a multi-blade pre-form (250); and
a forming operation comprising forming the blade pre-form (150) to introduce twist in the blade pre-form (150);
wherein the multi-blade pre-form (250) is cut into individual blade pre-forms (150) before individually forming each of the blade pre-forms (150) in respective forming operations.

2. A method (300) according to claim 1, wherein the lay-up operation comprises laying-up two or more potions of the blade pre-form (150) onto the or each respective lay-up surface (134) and subsequently combining the two or more portions together at an interface (160) to form the blade pre-form (150).

3. A method (300) according to claim 2, wherein the interface (160) between the two portions corresponds to a camber line of the composite blade (100).

4. A method (300) according to any preceding claim, wherein the lay-up operation comprises laying-up unitary ply sheets, such that at least some ply layers of the pre-form (50) consist of a respective portion (132) of a unitary ply sheet.

5. A method (300) according to claim 4, wherein at least some of the unitary ply sheets of the multi-blade pre-form (250) extend over a region corresponding to at least two blade pre-forms (150).

6. A method (300) according to any preceding claim, wherein the blade pre-form (150) is twisted by at least 15 degrees around a span-wise axis (110) of the blade pre-form (150) in the forming operation.

7. A method (300) according to any preceding claim, wherein the lay-up surface (134) is curved in only one dimension.

8. A method (300) according to claim 7, wherein the lay-up surface (134) is curved about a chord-wise axis of the blade.

9. A method (300) according to any preceding claim, wherein an aerofoil region of the lay-up surface (134) corresponding to an aerofoil portion (104, 152) of the blade pre-form (150) is substantially flat, and a root region of the lay-up surface (134) corresponding to a root portion (102, 154) of the blade pre-form (150) departs from the plane of the aerofoil region of the lay-up surface (134).

10. A method (300) according to any of claims 1-6, wherein the lay-up surface (134) is substantially flat in a region corresponding to a root to a tip (108, 158) of the blade pre-form (150).

## Patentansprüche

1. Verfahren (300) zum Herstellen eines Verbundstoffblatts (100), das Verfahren umfassend:
einen Legevorgang, umfassend ein Auflegen von Faserverstärkungsmaterial (138) auf eine unverdrillte Legefläche (234) um eine mehrblättrige Vorform (250) anzufertigen; und
einen Formgebungsvorgang, umfassend ein Formen der Blattvorform (150), um ein Verdrehen in die Blattvorform (150) einzubringen;
wobei die mehrblättrige Vorform (250) in einzelne Blattvorformen (150) geschnitten wird, bevor jede der Blattvorformen (150) in entsprechenden Formgebungsvorgängen individuell geformt wird.

2. Verfahren (300) nach Anspruch 1, wobei der Legevorgang ein Auflegen von zwei oder mehr Abschnitten der Blattvorform (150) auf die oder jede entsprechende Legefläche (134) und ein anschließendes Kombinieren der zwei oder mehreren Abschnitte zusammen an einer Grenzfläche (160) umfasst, um die Blattvorform (150) zu bilden.

3. Verfahren (300) nach Anspruch 2, wobei die Grenzfläche (160) zwischen den beiden Abschnitten einer Wölbungslinie des Verbundstoffblatts (100) entspricht.

4. Verfahren (300) nach einem vorherigen Anspruch, wobei der Legevorgang ein Legen von einlagigen Bögen umfasst, sodass mindestens einige Lagen des Vorformlings (50) aus einem jeweiligen Abschnitt (132) eines einlagigen Bogens bestehen.

5. Verfahren (300) nach Anspruch 4, wobei sich mindestens einige der einlagigen Bögen der mehrblättrigen Vorform (250) über einen Bereich erstrecken, der mindestens zwei Blattvorformen (150) entspricht.

6. Verfahren (300) nach einem vorherigen Anspruch, wobei die Blattvorform (150) bei dem Formgebungsvorgang um mindestens 15 Grad um eine Spannweitenachse (110) der Blattvorform (150) verdreht wird.

7. Verfahren (300) nach einem vorherigen Anspruch, wobei die Legefläche (134) nur in einer Dimension gekrümmt ist.

8. Verfahren (300) nach Anspruch 7, wobei die Legefläche (134) um eine Sehnenachse des Blatts gekrümmt ist.

9. Verfahren (300) nach einem vorherigen Anspruch, wobei ein Profilbereich der Legefläche (134), der einem Profilabschnitt (104, 152) der Blattvorform (150) entspricht, im Wesentlichen flach ist, und ein Wurzelbereich der Legefläche (134), der einem Wurzelabschnitt (102, 154) der Blattvorform (150) entspricht, von der Ebene des Profilbereichs der Legefläche (134) abweicht.

10. Verfahren (300) nach einem der Ansprüche 1 bis 6, wobei die Legefläche (134) in einem Bereich, der von einer Wurzel bis zu einer Spitze (108, 158) der Blattvorform (150) entspricht, im Wesentlichen flach ist.

## Revendications

1. Procédé (300) de fabrication d'une pale composite (100), le procédé comprenant :
une opération de superposition comprenant la pose d'un matériau de renforcement de fibre (138) sur une surface de superposition non torsadée (234) pour réaliser une préforme multipale (250) ; et
une opération de formation comprenant la formation de la préforme de pale (150) pour introduire une torsion dans la préforme de pale (150) ;
ladite préforme multipale (250) étant découpée en préformes de pale individuelles (150) avant de former individuellement chacune des préformes de pale (150) dans des opérations de formation respectives.

2. Procédé (300) selon la revendication 1, ladite opération de superposition comprenant la superposition de deux, ou plus, parties de la préforme de pale (150) sur la ou chaque surface de superposition respective (134) et ensuite la combinaison ensemble des deux, ou plus, parties au niveau d'une interface (160) pour former la préforme de pale (150).

3. Procédé (300) selon la revendication 2, ladite interface (160) entre les deux parties correspondant à une ligne de cambrure de la pale composite (100).

4. Procédé (300) selon une quelconque revendication précédente, ladite opération de superposition comprenant la superposition de feuilles de plis unitaires, de sorte qu'au moins certaines couches de pli de la préforme (50) soient constituées d'une partie respective (132) d'une feuille de plis unitaire.

5. Procédé (300) selon la revendication 4, au moins certaines des feuilles de plis unitaires de la préforme multipale (250) s'étendant sur une zone correspondant à au moins deux préformes de pale (150).

6. Procédé (300) selon une quelconque revendication précédente, ladite préforme de pale (150) étant torsadée d'au moins 15 degrés autour d'un axe (110) dans le sens de l'envergure de la préforme de pale (150) lors de l'opération de formation.

7. Procédé (300) selon une quelconque revendication précédente, ladite surface de superposition (134) étant courbée dans une seule dimension.

8. Procédé (300) selon la revendication 7, ladite surface de superposition (134) étant courbée autour d'un axe dans le sens de la corde de la pale.

9. Procédé (300) selon une quelconque revendication précédente, une zone de profil aérodynamique de la surface de superposition (134), correspondant à une partie de profil aérodynamique (104, 152) de la préforme de pale (150), étant sensiblement plate, et une zone d'emplanture de la surface de superposition (134) correspondant à une partie emplanture (102, 154) de la préforme de pale (150) s'écartant du plan de la zone de profil aérodynamique de la surface de superposition (134).

10. Procédé (300) selon l'une quelconque des revendications 1-6, ladite surface de superposition (134) étant sensiblement plate dans une zone correspondant à une zone allant d'une emplanture à une pointe (108, 158) de la préforme de pale (150).
